# EUROPÄISCHE PATENTSCHRIFT

(11) **EP 1 432 655 B1**
(45) Veröffentlichungstag und Bekanntmachung des Hinweises auf die Patenterteilung: **23.03.2005**
(21) Anmeldenummer: 02800589.0
(22) Anmeldetag: 01.10.2002
(51) Int. Cl.: H01M 8/04

(54) **BRENNSTOFFZELLENSYSTEM MIT EINEM MASSENSTROMSENSOR**
FUEL CELL SYSTEM WITH A MASS FLOW SENSOR
SYSTEME DE PILE A COMBUSTIBLE EQUIPE D'UN CAPTEUR DE DEBIT MASSIQUE

(30) Priorität: 02.10.2001 DE 10148664
(43) Veröffentlichungstag der Anmeldung: 30.06.2004
(73) Patentinhaber: Ballard Power Systems AG, 73230 Kirchheim / Teck-Nabern (DE); Pierburg GmbH, 41460 Neuss (DE)
(72) Erfinder: HUNKEL, Dirk, F-52062 Aachen (DE); MAURER, Wolfgang, 73730 Esslingen (DE)
(74) Vertreter: Beyer, Andreas, Dr.
(86) Internationale Anmeldenummer: PCT/EP2002/011003
(87) Internationale Veröffentlichungsnummer: WO 2003/031354

(56) Entgegenhaltungen:
- EP-A- 1 043 791
- EP-A- 1 099 939
- US-A- 5 366 821
- PATENT ABSTRACTS OF JAPAN vol. 010, no. 213 (E-422), 25. Juli 1986 (1986-07-25) -& JP 61 051773 A (MITSUBISHI ELECTRIC CORP), 14. März 1986 (1986-03-14) in der Anmeldung erwähnt

## Beschreibung

Die Erfindung betrifft ein Brennstoffzellensystem gemäß dem Oberbegriff des Patentanspruchs 1.

Massenstromsensoren für Luft und Gase, wie z. B. Wasserstoff, werden verbreitet in der Prozessindustrie, wie z. B. der Chemie, der Petrochemie, der Lebensmittelherstellung, der Abwasserbehandlung und dem Kraftwerksbereich, eingesetzt. Es handelt sich hierbei um den Einsatz in stationären Anlagen. Für den Einsatz in mobilen Einrichtungen, die üblicherweise in Serie gefertigt werden wie beispielsweise Fahrzeuge, müssen die Sensoren bestimmte zusätzliche Anforderungen an Baugröße, Gewicht, Ansprechzeit und Kosten erfüllen. Die in der Prozessindustrie eingesetzten Massenstromsensoren genügen diesen Anforderungen üblicherweise nicht.

Für den Einsatz in verbrennungsmotorisch betriebenen Fahrzeugen wird in der DE 199 53 718 A1 ein Luftmassensensor offenbart, der im Luftansaugkanal einer Brennkraftmaschine angeordnet ist. Ein weiterer Luftmassensensor wird als Abgasmassensensor direkt in die Abgasrückführleitung eingebunden. Der in der DE 199 53 718 A1 offenbarte Luftmassensensor erfüllt die zusätzlichen Anforderungen, die sich aus einem Einsatz in einer mobilen Einrichtung ergeben.

In der JP 61051773 A werden Durchflusssensoren in einem Brennstoffzellensystem eingesetzt, um die Nutzungsfaktoren von Wasserstoff und Sauerstoff zu ermitteln. Die Durchflusssensoren sind in den Zufuhr- und Abgasleitungen der Anode und der Kathode einer Brennstoffzelleneinheit angeordnet.

Aufgabe der Erfindung ist es demgegenüber, ein Brennstoffzellensystem zur Verfügung zu stellen, bei dem die Menge des wasserstoffreichen Gases schnell und preiswert bestimmt werden kann.

Diese Aufgabe wird durch ein Brennstoffzellensystem mit den Merkmalen des Anspruchs 1 gelöst.

Der Vorteil der Erfindung liegt darin, daß ein Massenstromsensor geschaffen wird, der die Vorteile des Luftmassensensors mit einem Anwendungsbereich eines in der Prozessindustrie eingesetzten Massenstromsensors vereint. Dadurch wird ein Massenstromsensor für ein wasserstoffreiches Gas geschaffen, der die für den Einsatz in einer mobilen Einrichtung, wie z. B. einem Brennstoffzellenfahrzeug, bestehenden Anforderungen an Gewicht, Baugröße, Kosten und Ansprechzeit erfüllt.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung gehen aus den weiteren Ansprüchen und der Beschreibung hervor.

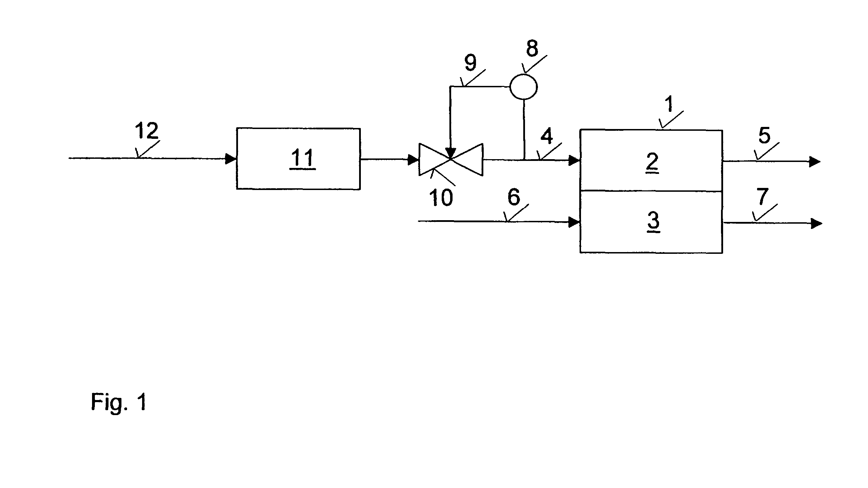

Die Erfindung ist nachstehend anhand einer Zeichnung näher beschrieben. Die einzige Figur zeigt
- eine Prinzipdarstellung eines erfindungsgemäßen Brennstoffzellensystems mit einem thermischen Massenstromsensor.

In der einzigen Figur ist ein Brennstoffzellensystem mit einer Brennstoffzelleneinheit 1 dargestellt. Die Brennstoffzelleneinheit 1, die beispielsweise die Leistung zum Antreiben eines Fahrzeugs zur Verfügung stellt, besteht aus einer Anode 2 und einer Kathode 3. Der Anode 2 wird über eine Zufuhrleitung 4 ein wasserstoffreiches Gas, beispielsweise Wasserstoff, zugeführt. Anodenabgas wird über eine Abgasleitung 5 abgeführt. Der Kathode 3 wird über eine Zufuhrleitung 6 ein sauerstoffreiches Gas zugeführt. Kathodenabgas wird über eine Abgasleitung 7 abgeführt. In der Zufuhrleitung 4 der Anode 2 ist ein Massenstromsensor 8 für die Messung des Massenstroms des wasserstoffreichen Gases angeordnet. Der Massenstromsensor 8 ist als thermischer Massenstromsensor nach Art eines Luftmassensensors, wie z. B. in der DE 199 53 718 beschrieben, ausgeführt.

Der in der DE 199 53 718 A1 offenbarte thermische Luftmassensensor arbeitet nach dem Prinzip eines Heißelement-Anemometers mit je einer Brückenschaltung für die Messung der Vor- und der Rückströmung des Luftmassenstroms.

Das wasserstoffreiche Gas wird vorzugsweise in einem Gaserzeugungssystem 11 aus einem Brennstoff, der üblicherweise ein kohlen- und wasserstoffhaltiges Medium wie z. B. Methanol enthält, erzeugt. Der Brennstoff wird dem Gaserzeugungssystem über eine Zufuhrleitung 12 zur Verfügung gestellt.

Der thermische Massenstromsensor 8 arbeitet vorzugsweise nach dem Prinzip eines Heißelement-Anemometers. Bei einem Heißelement-Anemometer liegen ein Temperatursensor, der die Temperatur des Gases erfasst, und ein Heizsensor, der auf eine bestimmte Übertemperatur zur Umgebungstemperatur aufgeheizt wird, bekannterweise in verschiedenen Zweigen einer Brückenschaltung. Der Heizsensor wird durch den Massenstrom des Gases abgekühlt. Der zum Halten der eingestellten Übertemperatur erforderliche zusätzliche Energiebetrag bzw. eine hiervon abhängige Größe ist dann ein Maß für die durchgesetzte Gasmasse. Die thermische Massenstrommessung kennzeichnet sich im Vergleich zu anderen Durchflussmessverfahren, wie z. B. der Coriolis-Massenstrommessung, der Ultraschall-Durchflussmessung, der Induktionsdurchflussmessung, der Wirbelfrequenz-Durchflussmessung, der Durchflussmessung mit Drosselmessgeräten, durch schnelle Ansprechzeiten des Sensors aus. Der Messbereich und das Signal-Rausch-Verhältnis hängen von der Wärmeleitfähigkeit des Gases ab und können durch Variation der Übertemperatur beeinflusst werden. Für die Messung des Massenstroms des wasserstoffreichen Gases zeichnen sich die gemessenen Signale durch eine hohes Signal-Rausch-Verhältnis aus.

Der thermische Massenstromsensor 8 umfasst vorzugsweise zwei Heizsensoren und zwei Temperatursensoren. Die Sensoren sind wie aus dem Stand der Technik bekannt jeweils zu einer Brücke verschaltet. Durch die Verwendung von zwei separaten Brückenschaltungen kann die Strömungsrichtung des Gases durch Vergleich der Brückensignale bzw. durch Vergleich der erforderlichen zusätzlichen Energiebeträge zum Halten der Übertemperaturen der jeweiligen Heizsensoren ermittelt werden. Hierdurch lassen sich Fehler bei der Ermittlung des Massenstroms vermeiden, die Auftreten können, wenn eine Rückströmung unberücksichtigt bleibt. Der erfindungsgemäße Massenstromsensor 8 für das wasserstoffreiche Gas arbeitet also nach dem gleichen Prinzip wie ein thermischer Luftmassensensor.

Der Massenstromsensor 8 ist an eine nicht dargestellte Strom- oder Spannungsquelle zur Strom- bzw. Spannungsversorgung angeschlossen. Weiterhin ist der Massenstromsensor 8 vorzugsweise an eine nicht dargestellte Auswerteeinheit, die beispielsweise auf dem Einsatz eines Mikroprozessors basiert, angeschlossen. Die Auswerteeinheit dient der Aufbereitung bzw. der Signalverarbeitung und/oder Darstellung bzw. Anzeige des vom Massensensor 8 gemessenen Signals. In der Auswerteeinheit kann ebenfalls eine Sensorfehlerdiagnose integriert sein.

Vorteilhafterweise kann der Massenstromsensor 8 in einen Steuerpfad und/oder Regelkreis 9 zur Massenstromeinstellung eingegliedert sein. Der Steuerpfad bzw. Regelkreis 9 enthält ein Regelventil 10, weiches stromauf des Massenstromsensors 8 und der Brennstoffzelleneinheit 1 angeordnet ist, und dient der Einstellung des Massenstroms des wasserstoffreichen Gases, der der Anode 2 der Brennstoffzelleneinheit 1 über die Zufuhrleitung 4 zugeführt wird. Über die nicht dargestellte Auswerteeinheit und/oder eine nicht dargestellte Regel-/Steuereinheit, welche vorteilhafterweise ebenfalls in dem Regelkreis 9 integriert sind, wird das Regelventil 10 derart gesteuert, daß der Anode 2 mehr oder weniger wasserstoffreiches Gas zugeführt wird. Durch die Verwendung des thermischen Massenstromsensors, der sich durch schnelle Ansprechzeiten auszeichnet und der Steuerung bzw. Regelung Messwerte des Massenstroms des wasserstoffreichen Gases zur Verfügung stellt, kann die Dynamik der Regelung, beispielsweise bei Lastsprüngen, und somit die Dynamik des Brennstoffzellensystems verbessert werden.

Der erfindungsgemäße Sensor 8 dient der Massenstrommessung von wasserstoffreichem Gas und ist zweckmäßigerweise in einem nicht dargestellten Gehäuse untergebracht, dessen Material einen Oberflächenwiderstand aufweist, der vorzugsweise kleiner als 10⁹ Ohm ist. Auf diese Weise lässt sich die Gefahr einer statischen Aufladung vermindern bzw. vermeiden. Die Dichtungen des Gehäuses sind dem den Sensor 8 umgebenden Medium, d.h. dem wasserstoffreichen Gas, entsprechend gewählt. Die medienführenden Komponenten des erfindungsgemäßen Sensors 8 sind bevorzugterweise entsprechend der Zündschutzart Eigensicherheit (EN50020) ausgeführt.

## Patentansprüche

1. Brennstoffzellensystem mit einer Brennstoffzelleneinheit (1) mit einer Anode (2) und einer Kathode (3), wobei die Anode (2) eine Zufuhrleitung (4) für ein wasserstoffreiches Gas und eine Abgasleitung (5) aufweist, und wobei die Kathode (3) eine Zufuhrleitung (6) für ein sauerstoffreiches Gas und eine Abgasleitung (7) aufweist, und wobei ein Massenstromsensor (8) für das wasserstoffreiche Gas in der Zufuhrleitung (4) der Anode (2) angeordnet ist,
**dadurch gekennzeichnet, daß**
als Massenstromsensor (8) ein thermischer Massenstromsensor eingesetzt wird.

2. Brennstoffzellensystem nach Anspruch 1,
**dadurch gekennzeichnet, daß**
der Massenstromsensor (8) an eine Strom- oder Spannungsversorgung angeschlossen ist.

3. Brennstoffzellensystem nach Anspruch 2,
**dadurch gekennzeichnet, daß**
der Massenstromsensor (8) an eine Auswerteeinheit angeschlossen ist.

4. Brennstoffzellensystem nach Anspruch 2,
**dadurch gekennzeichnet, daß**
der Massenstromsensor (8) in einen Steuerpfad und/oder Regelkreis (9) eingegliedert ist.

5. Brennstoffzellensystem nach Anspruch 1,
**dadurch gekennzeichnet, daß**
der Massenstromsensor (8) zwei Heizsensoren und zwei Temperatursensoren aufweist, die zu zwei Brückenschaltungen verschaltet sind.

6. Brennstoffzellensystem nach Anspruch 1,
**dadurch gekennzeichnet, daß**
der Massenstromsensor (8) ein nach dem Prinzip eines thermischen Luftmassensensors arbeitender Sensor ist.

## Claims

1. Fuel cell system including a fuel cell unit (1) comprising an anode (2) and a cathode (3), the anode (2) having an inlet line (4) for a hydrogen-rich gas and an exhaust line (5), and the cathode (3) having an inlet line (6) for an oxygen-rich gas and an exhaust line (7), and a mass flow sensor (8) for the hydrogen-rich gas being arranged in the inlet line (4) of the anode (2),
**characterised in that**
a thermal mass flow sensor is used as the mass flow sensor (8).

2. Fuel cell system according to claim 1, **characterised in that** the mass flow sensor (8) is connected to a current or voltage supply.

3. Fuel cell system according to claim 2, **characterised in that** the mass flow sensor (8) is connected to an evaluation unit.

4. Fuel cell system according to claim 2, **characterised in that** the mass flow sensor (8) is incorporated in a control path and/or feedback control loop (9).

5. Fuel cell system according to claim 1, **characterised in that** the mass flow sensor (8) includes two heat sensors and two temperature sensors which are connected to two bridge circuits.

6. Fuel cell system according to claim 1, **characterised in that** the mass flow sensor (8) is a sensor operating on the principle of a thermal air mass sensor.

## Revendications

1. Système de pile à combustible équipé d'une unité (1) de pile à combustible comportant une anode (2) et une cathode (3), dans lequel l'anode (2) possède une canalisation d'amenée (4) pour un gaz riche en hydrogène et une canalisation d'évacuation de gaz (5), et dans lequel la cathode (3) possède une canalisation d'amenée (6) pour un gaz riche en oxygène et une canalisation d'évacuation de gaz (7), et dans lequel il est prévu un capteur de débit massique (8) pour le gaz riche en hydrogène situé dans la canalisation d'amenée (4) de l'anode (2),
**caractérisé en ce qu'**on utilise comme capteur de débit massique (8) un capteur thermique de débit massique.

2. Système de pile à combustible selon la revendication 1, **caractérisé en ce que** le capteur de débit massique (8) est raccordé à un système d'alimentation en courant ou en tension.

3. Système de pile à combustible selon la revendication 2, **caractérisé en ce que** le capteur de débit massique (8) est raccordé à une unité d'évaluation.

4. Système de pile à combustible selon la revendication 2, **caractérisé en ce que** le capteur de débit massique (8) est inséré dans une voie de commande et/ou dans un circuit de régulation (9).

5. Système de pile à combustible selon la revendication 1, **caractérisé en ce que** le capteur de débit massique (8) comporte deux capteurs de chauffage et deux capteurs de température, qui sont connectés à deux circuits en pont.

6. Système de pile à combustible selon la revendication 1, **caractérisé en ce que** le capteur de débit massique (8) est un capteur travaillant selon le principe d'un capteur thermique de débit massique.
